# EUROPÄISCHE PATENTSCHRIFT

(11) **EP 3 386 833 B1**
(45) Veröffentlichungstag und Bekanntmachung des Hinweises auf die Patenterteilung: **17.02.2021**
(21) Anmeldenummer: 17705145.5
(22) Anmeldetag: 17.02.2017
(51) Int. Cl.: B61D 27/00, B61D 17/04

(54) **ELEKTRISCH BETRIEBENES SCHIENENFAHRZEUG MIT KLIMA- UND/ODER HEIZANLAGE**
ELECTRICALLY OPERATED RAIL VEHICLE WITH AIR-CONDITIONING AND/OR HEATING DEVICE
VEHICULE SUR RAIL A ACTIONNEMENT ELECTRIQUE AVEC INSTALLATION DE CLIMATISATION ET/OU DE CHAUFFAGE

(30) Priorität: 15.03.2016 EP 16160306
(43) Veröffentlichungstag der Anmeldung: 17.10.2018
(73) Patentinhaber: Siemens Mobility Austria GmbH, 1210 Wien (AT)
(72) Erfinder: STOJANOVIC, Vladimir, 1100 Wien (AT); STRUCKL, Walter, 1150 Wien (AT)
(74) Vertreter: Deffner, Rolf
(86) Internationale Anmeldenummer: PCT/EP2017/053621
(87) Internationale Veröffentlichungsnummer: WO 2017/157610

(56) Entgegenhaltungen:
- EP-A1- 2 942 257
- EP-A1- 2 977 243
- EP-A2- 2 078 654
- DE-A1-102009 031 237
- JP-A- 2014 213 653
- JP-A- 2015 223 863

## Beschreibung

Elektrisch betriebenes Schienenfahrzeug mit Klima- und/oder Heizanlage

### Gebiet der Erfindung

Die Erfindung bezieht sich auf ein elektrisch betriebenes Schienenfahrzeug, umfassend
- eine Klima- und/oder Heizanlage zum Klimatisieren bzw. Heizen eines Fahrzeuginnenraumes, insbesondere Fahrgast- und/oder Personalraumes, wobei die Klima- und/oder Heizanlage eine Wärmepumpe und einen an die Wärmepumpe angeschlossenen Heizkreis umfasst, sowie einen Wärmetauscher zur Aufnahme von Wärmeenergie aufweist, welcher ein Wärmetauscher der Wärmepumpe ist und
- zumindest einen elektrischen Umrichter, insbesondere Traktionsumrichter und/oder Hilfsbetriebeumrichter, der eine Wärmeabfuhr-Schnittstelle zum Abführen von Abwärme mittels eines Wärmeträgers aufweist, und wobei
- die Wärmeabfuhr-Schnittstelle des Umrichters über einen Wärmeträgerkanal mit dem Wärmetauscher der Klima- und/oder Heizanlage verbunden ist.

Die Funktionen der Klima- bzw. Heizanlage sind die Bereitstellung von Wärme in der Winterzeit, Luftaustausch im Fahrgastraum und die Kühlung des Fahrgastraumes in der Sommerzeit. Dafür wird elektrische Energie aus dem Fahrdraht und Luft aus der Umgebung entnommen, wodurch eine zusätzliche Umweltbelastung entsteht.

### Stand der Technik

Der Nachteil bekannter Schienenfahrzeuge besteht darin, dass der über den Fahrdraht bezogene Energiebedarf für die Klimatisierung der Fahrgasträume, insbesondere für das Beheizen in der kalten Jahreszeit, verhältnismäßig hoch ist. Der Anteil der elektrischen Heizung am gesamten Energieverbrauch eines Personenzuges beträgt in der mitteleuropäischen Klimazone etwa 11% der gesamt aufgenommenen Energie. Die Energiebilanz eines solcherart betriebenen Schienenfahrzeuges ist mit den zunehmend höher gesteckten Zielen hinsichtlich Energieeinsparung und CO2-Ausstoß nicht mehr vereinbar.

Das Dokument EP 2 942 257 A1 beschreibt ein gattungsgemäßes elektrisch betriebenes Schienenfahrzeug.

### Aufgabe der Erfindung

Es ist daher eine Aufgabe der vorliegenden Erfindung, ein Schienenfahrzeug bereitzustellen, das diesen Nachteil nicht aufweist und für die Klimatisierung, insbesondere das Heizen der Fahrzeuginnenräume, einen reduzierten Energiebedarf aufweist. Dadurch soll die Wirtschaftlichkeit erhöht und die Umweltbelastung verringert werden.

### Darstellung der Erfindung

Diese Aufgabe wird mit einem eingangs erwähnten Schienenfahrzeug dadurch erreicht, dass das Schienenfahrzeug eine erste Klappe aufweist, welche die Verbindung zwischen der Wärmeabfuhr-Schnittstelle und dem Wärmetauscher in einer ersten Stellung freigibt und in einer zweiten Stellung trennt und wobei die erste Klappe in der zweiten Stellung eine in dem Wärmeträgerkanal zwischen der Wärmeabfuhr-Schnittstelle und dem Wärmetauscher ausgebildete erste Auslassöffnung zur Umgebung hin freigibt, wodurch die Wärmeabfuhr-Schnittstelle mit der Umgebung verbunden ist und wobei das Schienenfahrzeug eine zweite Klappe aufweist, die eine zweite Auslassöffnung, über die der Wärmetauscher mit der Umgebung verbindbar ist, in einer ersten Stellung schließt und in einer zweiten Stellung freigibt.

Elektrisch betriebene Schienenfahrzeuge weisen zumindest einen Traktionsumrichter (auch Wechselstromumrichter bzw. Frequenzumrichter genannt) auf, um die über den Fahrdraht aufgenommene elektrische Leistung hinsichtlich ihrer Frequenz und Spannung an die momentanen Erfordernisse des/der Fahrmotors/-en anzupassen (Regelung der Drehzahl und des Drehmomentes der Traktionsmotoren sowie die Energierückspeisung an das Versorgungsnetz beim Bremsvorgang) . Zusätzlich zu dem Traktionsumrichter kann ein Schienenfahrzeig sog. Hilfsbetriebeumrichter aufweisen, die aus einer Eingangs-Wechselspannung eine in der Frequenz und/oder Amplitude unterschiedliche Spannung generieren und diese für Hilfsaggregate bereitstellen. Hilfsaggregate können z.B. sein: Lüfter, Pumpen, Kompressoren, Lichtsysteme innerhalb und an der Außenseite des Zuges, Kommunikationssysteme, Bereitstellung für Steckdosen, etc. Im Hilfsbetriebe- und Traktionsumrichter gibt es mehrere Komponenten, in welchen elektrische Energie in Wärme umgewandelt wird.

Durch die erfindungsgemäße Kopplung des Umrichters mit der Klima- bzw. Heizanlage kann die Abwärme des Umrichters gezielt für das Heizen der Fahrgasträume bzw. des Führerstandes benutzt werden. Es wird dadurch verhindert, dass die Abwärme ungenutzt an die Umgebung abgegeben wird. Durch die erfindungsgemäße Maßnahme ist es möglich, die elektrischen Verluste im Umrichter in Nutzenergie mit hohem Wirkungsgrad umzuwandeln.

Im Zusammenhang mit einem Hilfsbetriebeumrichter ist besonders erwähnenswert, dass ein solcher noch vor Einleitung eines Schienenfahrzeugs in den Verkehr eingeschaltet wird und bis zum Betriebsende eingeschaltet bleibt und während der gesamten Zeit Abwärme produziert. Hingegen produziert ein Traktionsumrichter die Abwärme nur während des Fahrens bzw. Bremsens. Daraus folgt, dass die Abwärme eines Hilfsbetriebeumrichters zu Heizzwecken auch bei stehenden Schienenfahrzeugen genutzt werden kann.

Insgesamt wird durch die Erfindung die für das Heizen erforderliche elektrische Energie verringert, wodurch schließlich auch dem Treibhauseffekt entgegengewirkt werden kann.

Unter Wärmeträgerkanal (vorzugsweise Luftkanal) wird eine Verbindung verstanden, durch die ein Wärmeträger, insbesondere Luft, geleitet werden kann. Der Wärmeträgerkanal kann dabei ein gesonderter Kanal (z.B. ein Rohr, Kasten, etc.) sein oder ganz oder teilweise im Umrichter und/oder in der Klima- bzw. Heizanlage integriert sein.

Unter Schienenfahrzeug wird in vorliegender Anmeldung jegliche Art von schienengebundenem Fortbewegungsmittel verstanden, insbesondere Triebfahrzeuge, Züge, Triebwagen, Waggons, komplette Garnituren, Schienenbusse, etc.

Ein weiterer Vorteil der Erfindung besteht darin, dass (aufgrund der Systemintegration) eine Senkung der vom Fahrzeug produzierten Wärme in Tunnelkanälen realisiert werden kann. Insbesondere in U-Bahn-Infrastrukturen, wo überschüssige Wärme aus dem Tunnel abgeführt werden muss, was zusätzliche Energie für Klimasysteme erfordert, bietet die vorliegende Erfindung erhebliches Verbesserungspotential, da die Abwärme des Umrichters nicht an die Umgebung abgegeben wird, sondern fahrzeugintern zum Heizen verwendet wird.

Der Wirkungsgrad eines Umrichters während der Heizsaison kann nach folgender Formel berechnet werden: η = (P2 + P_{Wärme}) / P1 P1 ... aufgenommene Leistung;
P2 ... abgegebene Leistung;
P_{Wärme} ... Thermische Leistung der ausgekoppelten Nutzwärme.

Die Wärme aus dem Umrichter : wird zu einer modernen, mit einer Wärmepumpe ausgerüsteten Klimaanlage geführt werden. In dieser kann aus der (bisher ungenutzten) Abwärme eine Nutzenergie bzw. Nutzwärme für die Heizung hergestellt werden. Dadurch muss nur mehr wenig Energie für die Heizung der Fahrgasträume über den Fahrdraht bezogen werden. Die elektrische Energie wird insbesondere noch für den Betrieb der (Kreisel)Pumpe des Heizkreises und den Verdichter der Wärmepumpe benötigt und wird somit hocheffizient genutzt.

Die erfindungsgemäße Ausführungsform zeichnet sich dadurch aus, dass die Klima- und/oder Heizanlage eine Wärmepumpe und einen an die Wärmepumpe angeschlossenen Heizkreis umfasst und dass der Wärmetauscher, mit dem die Wärmeabfuhr-Schnittstelle des Umrichters über den Wärmeträgerkanal verbunden ist, ein Wärmetauscher der Wärmepumpe ist. Dieser Wärmetauscher kann z.B. unmittelbar der Verdampfer der Wärmepumpe sein, der die vom Umrichter kommende Abwärme aufnimmt. Im Kreisprozess der Wärmepumpe wird Wärmeleistung am Kondensator abgegeben. Die Wärme gelangt in den Heizkreis und über diesen zu den Heizkörpern bzw. -aggregaten im Fahrgastraum.

In dieser Ausführungsform können bestehende Klima- bzw. Heizanlagen ohne bzw. mit nur geringfügigen Adaptierungen verwendet werden, indem lediglich eine Verbindung von der Wärmeabfuhr-Schnittstelle des Umrichters zum Wärmetauscher (bzw. Verdampfer) der Wärmepumpe hergestellt wird.

An dieser Stelle sei erwähnt, dass die Wärmeabfuhr-Schnittstelle des Umrichters auch direkt mit einem Heizkreis bzw. einem darin angeordneten Wärmetauscher verbunden sein kann (somit unter Umgehung der Wärmepumpe oder bei Abwesenheit einer Wärmepumpe).

Die erfindungsgemäße Ausführungsform zeichnet sich dadurch aus, dass das Schienenfahrzeug eine erste Klappe aufweist, welche die Verbindung zwischen der Wärmeabfuhr-Schnittstelle und dem Wärmetauscher in einer ersten Stellung freigibt und in einer zweiten Stellung trennt. Bevorzugt ist diese Klappe durch einen Antrieb betätigbar (z.B. vom Führerstand aus). Damit können zwei Betriebsmodi realisiert werden: In einem ersten Betriebsmodus (erste Stellung) wird die Abwärme des Umrichters zum Wärmetauscher der Klima- und/oder Heizanlage geleitet und zum Heizen eines Fahrzeuginnenraumes verwendet (Winterbetrieb). In einem zweiten Betriebsmodus, in dem sich die erste Klappe in geschlossener Stellung befindet (d.h. die Verbindung zwischen Umrichter und Wärmetauscher ist getrennt) wird die Klima- bzw. Heizanlage zur Kühlung des Fahrgastraumes verwendet. Die erste Klappe verhindert in der zweiten Stellung eine Belastung der (nun als Kältemaschine betriebenen) Wärmepumpe mit zusätzlichem Wärmeeintrag seitens des Umrichters (Sommerbetrieb).

Erfindungsgemäß ist vorgesehen, dass die erste Klappe in der zweiten Stellung eine in dem Wärmeträgerkanal zwischen der Wärmeabfuhr-Schnittstelle und dem Wärmetauscher ausgebildete Auslassöffnung zur Umgebung hin freigibt, wodurch die Wärmeabfuhr-Schnittstelle mit der Umgebung verbunden ist. Auf diese Weise kann mittels derselben (ersten) Klappe im Sommerbetrieb die Abwärme des Umrichters an die Umgebung abgegeben werden. Das Umschalten zwischen Sommer- und Winterbetrieb kann besonders einfach erfolgen, wenn die erste Klappe in der ersten Stellung die Auslassöffnung schließt.

Erfindungsgemäß ist vorgesehen, dass das Schienenfahrzeug eine zweite Klappe aufweist, die eine zweite Auslassöffnung, über die der Wärmetauscher mit der Umgebung verbindbar ist, in einer ersten Stellung schließt und in einer zweiten Stellung freigibt. Damit werden die für einen Kältemaschinenbetrieb erforderlichen Strömungsverhältnisse ermöglicht (Umkehr der Strömungsrichtung).
Eine bevorzugte Ausführungsform zeichnet sich dadurch aus, dass die erste Klappe und/oder die zweite Klappe zwischen der ersten Stellung und der zweiten Stellung durch einen Antrieb betätigbar sind und/oder dass die erste Klappe und die zweite Klappe miteinander synchronisiert sind. Eine z.B. mechanische oder antriebsmäßige Synchronisation der Klappen ermöglicht ein zuverlässiges Umschalten zwischen Sommer- und Winterbetrieb. Bedienfehler können dadurch vermieden werden.
Es kann vorgesehen sein, dass der Wärmetauscher in einem kastenförmigen Gehäuse untergebracht ist, wobei die zweite Klappe in oder an dem kastenförmigen Gehäuse ausgebildet ist, und/oder dass der Wärmeträgerkanal zumindest abschnittsweise durch ein kastenförmiges Gehäuse gebildet wird und die erste Auslassöffnung in dem Gehäuse, vorzugsweise in unmittelbarer Nähe zum Wärmetauscher, ausgebildet ist. Dadurch ergibt sich eine kompakte Bauweise und kann das Klappensystem (aus erster und zweiter Klappe) räumlich konzentriert ausgebildet werden.

### Kurze Beschreibung der Figuren

Die Erfindung wird nun anhand von bevorzugten Ausführungsbeispielen näher erläutert. Die Zeichnungen sind beispielhaft und sollen den Erfindungsgedanken zwar darlegen, ihn aber keinesfalls einengen oder gar abschließend wiedergeben. Dabei zeigt:
- Fig. 1: ein erfindungsgemäßes Schienenfahrzeug,
- Fig. 2: einen Ausschnitt einer Klima- bzw. Heizanlage im Bereich der Einmündung des Wärmeträgerkanals im Winterbetrieb,
- Fig. 3: einen Ausschnitt einer Klima- bzw. Heizanlage im Bereich der Einmündung des Wärmeträgerkanals im Sommerbetrieb,
- Fig. 4: das Funktionsprinzip einer Ausführungsform der Erfindung im Detail.

### Wege zur Ausführung der Erfindung

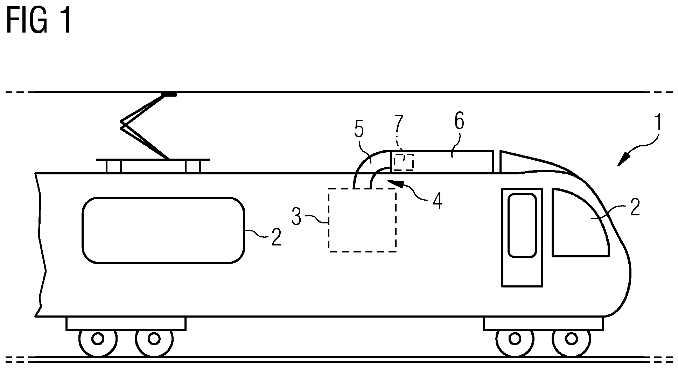

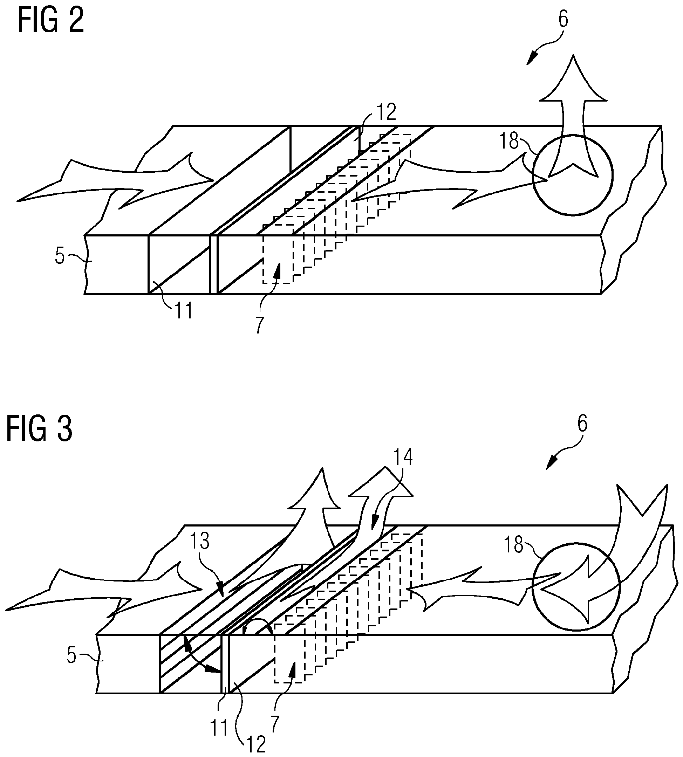

Fig. 1 zeigt ein elektrisch betriebenes Schienenfahrzeug 1, das die elektrische Energie über einen Stromabnehmer aus dem Fahrdraht entnimmt. Eine Klima- und/oder Heizanlage 6 dient zum Klimatisieren bzw. Heizen von Fahrzeuginnenräumen 2 (hier: Fahrgastraum und Führerstand). Zur Aufnahme von Wärmeenergie weist die Klima- und/oder Heizanlage 6 einen Wärmetauscher 7 auf (Fig. 2, 3 und 4).

Das Schienenfahrzeug 1 umfasst auch zumindest einen elektrischen Umrichter 3 zur Frequenz- bzw. Amplituden-Wandlung der vom Fahrdraht bezogenen Spannung für die Fahrmotoren oder Hilfsaggregate. Zur Kühlung des Umrichters 3 und Wärmeabfuhr dient ein Wärmeträger (insbesondere Luft), der an den wärmeabgebenden Strukturen des Umrichters 3 vorbeigeführt wird. Der Umrichter 3 weist somit eine Wärmeabfuhr-Schnittstelle 4 zum Abführen von Abwärme mittels des Wärmeträgers auf.

Die Wärmeabfuhr-Schnittstelle 4 des Umrichters 3 ist über einen Wärmeträgerkanal 5 mit dem Wärmetauscher 7 der Klima- und/oder Heizanlage 6 verbunden. Dadurch kann die Abwärme des Umrichters 3 zum Heizen des Schienenfahrzeuges 1 verwendet werden, wodurch sich der Gesamtenergieverbrauch spürbar verringern lässt.

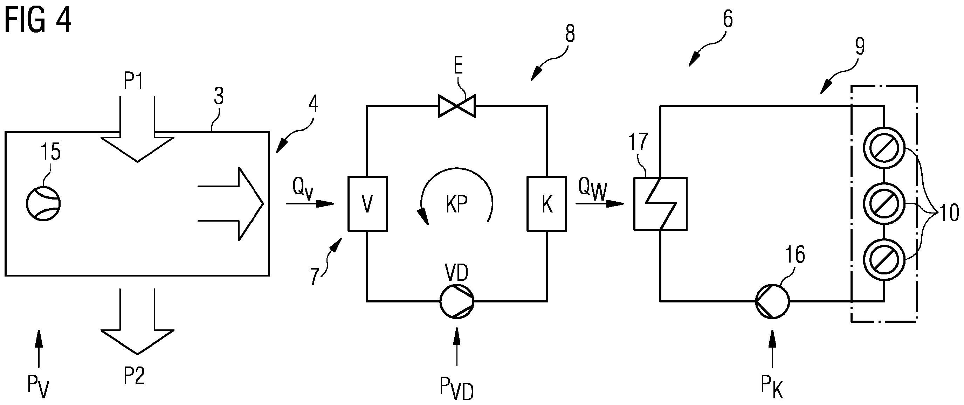

Fig. 4 zeigt eine bevorzugte Variante, bei der die Klima- bzw. Heizanlage 6 eine Wärmepumpe 8 und einen an die Wärmepumpe 8 angeschlossenen Heizkreis 9 umfasst. Der Wärmetauscher 7, mit dem die Wärmeabfuhr-Schnittstelle 4 des Umrichters 3 über den Wärmeträgerkanal 5 verbunden ist, ist ein Wärmetauscher der Wärmepumpe 8, nämlich hier der Verdampfer V. Der Kreisprozess KP der Wärmepumpe 8 umfasst einen Verdichter VD, einen Kondensator K und ein Expansionsventil E. Zum Betreiben des Verdichters VD ist die elektrische Antriebsleistung PVD erforderlich.

P1 ist die aufgenommene elektrische Leistung und P2 die abgegebene elektrische Leistung des Umrichters 3. Der Umrichter 3 umfasst neben den (nicht dargestellten) elektrischen Komponenten einen Lüfter 15 (z.B. Ventilator), der mit der elektrischen Antriebsleistung PV versorgt wird. PW stellt die mittels Wärmeträger ausgekoppelte thermische Leistung dar, die von der Wärmepumpe 8 als Nutzwärme aufgenommen wird. QV bezeichnet die im Verdampfer V aufgenommene Wärmeleistung und QW die vom Kondensator K an den Wärmetauscher 17 des Heizkreises 9 abgegebene Wärmeleistung. Der Heizkreis 9 umfasst neben dem Wärmetauscher 17 eine (Kreisel)Pumpe 16 und Heizkörper 10 als Wärmeverbraucher, die üblicherweise im Wagenkasten des Schienenfahrzeuges 1 angeordnet sind. PK bezeichnet die elektrische Antriebsleistung der Pumpe 16.

Statt der Heizkörper 10 könnte der Heizkreis einen oder mehrere Wärmetauscher direkt in der Klimaanlage bei der Luftansaugung als Wärmeverbraucher aufweisen. Die mittels der Wärmetauscher erwärmte Luft kann über Lüftungskanäle in den Fahrzeuginnenraum geleitet werden. Dadurch kann Strom eingespart werden, der sonst für elektrische Heizregister zur Erwärmung der Luft in den Lüftungskanälen aufzuwenden wäre.

In einer nicht dargestellten Variante der Erfindung könnte die Wärmeabfuhr-Schnittstelle 4 des Umrichters 3 auch direkt mit dem im Heizkreis 9 angeordneten Wärmetauscher 17 verbunden sein; entweder unter Umgehung der Wärmepumpe 8 oder für den Fall, dass eine Wärmepumpe überhaupt nicht vorgesehen ist.

Figuren 2 und 3 zeigen eine bevorzugte Variante, bei der die Klima-/Heizanlage 6 in zwei Betriebsmodi gefahren werden kann. Dazu weist das Schienenfahrzeug 1 eine erste Klappe 11 auf, welche die Verbindung zwischen der Wärmeabfuhr-Schnittstelle 4 und dem Wärmetauscher 7 in einer ersten Stellung freigibt (Fig. 2) und in einer zweiten Stellung trennt (Fig. 3). Durch Betätigen der ersten Klappe 11 (gemäß gebogenem Doppelpfeil in Fig. 3) kann somit eingestellt werden, ob die Abwärme des Umrichters 3 von der Klima-/Heizanlage 6 genutzt werden soll oder nicht.

Bevorzugt ist, wenn die erste Klappe 11 in der zweiten Stellung (Fig. 3) eine in dem Wärmeträgerkanal 5 zwischen der Wärmeabfuhr-Schnittstelle 4 und dem Wärmetauscher 7 ausgebildete erste Auslassöffnung 13 zur Umgebung hin freigibt, wodurch die Wärmeabfuhr-Schnittstelle 4 mit der Umgebung verbunden ist.

Die erste Klappe 11 kann dabei derart ausgebildet sein, dass sie in der ersten Stellung (Fig. 2) die erste Auslassöffnung 13 schließt.

In der dargestellten Ausführungsform weist das Schienenfahrzeug 1 auch eine zweite Klappe 12 auf, die eine zweite Auslassöffnung 14, über die der Wärmetauscher 7 mit der Umgebung verbindbar ist, in einer ersten Stellung schließt (Fig. 2) und in einer zweiten Stellung freigibt (Fig. 3); siehe gebogenen Doppelpfeil in Fig. 3.

In der ersten Stellung der Klappen 11, 12 strömt der Wärmeträger (hier: Luft) vom Umrichter 3 durch den Wärmetauscher 7 zur Öffnung 18 und wird dort in die Umgebung entlassen.

In der zweiten Stellung der Klappen 11, 12 wird die Abwärme des Umrichters 3 über die Auslassöffnung 13 direkt (d.h. nicht über den Wärmetauscher 7) an die Umgebung geführt. In der Klimaanlage 6 ist die Strömungsrichtung nun entgegengesetzt: Luft wird über die Öffnung 18 (z.B. mittels eines Ventilators) angesaugt und über den Wärmetauscher 7 geführt, bevor sie anschließend über die Auslassöffnung 14 wieder an die Umgebung abgegeben wird.

Die Klappen 11, 12 können zwischen der jeweils ersten und zweiten Stellung durch einen Antrieb betätigbar sein. Bevorzugt ist, wenn die Klappen 11, 12 miteinander synchronisiert sind, z.B. mechanisch oder antriebsmäßig.

Wie aus den Fig. 2 und 3 ersichtlich kann der Wärmetauscher 7 in einem kastenförmigen Gehäuse der Klima-/Heizanlage 6 untergebracht sein. Die zweite Klappe 12 ist dabei in oder an dem kastenförmigen Gehäuse ausgebildet. Entsprechend kann der Wärmeträgerkanal 5 zumindest abschnittsweise durch ein kastenförmiges Gehäuse gebildet sein, wobei die erste Auslassöffnung 13 in diesem Gehäuse, vorzugsweise in unmittelbarer Nähe zum Wärmetauscher 7, ausgebildet ist.

Die Ausführungsform gemäß Fig. 2 und 3 ermöglicht nun, dass in einem ersten Betriebsmodus die Abwärme des Umrichters 3 zum Wärmetauscher 7 der Klima- und/oder Heizanlage 6 geleitet und zum Heizen eines Fahrzeuginnenraumes 2, insbesondere Fahrgast- und/oder Personalraumes, verwendet wird (Winterbetrieb). In einem zweiten Betriebsmodus kann die Verbindung zwischen der Wärmeabfuhr-Schnittstelle 4 und dem Wärmetauscher 7 getrennt sein und die Abwärme des Umrichters 3 direkt in die Umgebung geleitet werden (Sommerbetrieb). Die Klima-/Heizanlage 6 kann dann als Kühlmaschine betrieben werden.

### BEZUGSZEICHENLISTE

- 1: Schienenfahrzeug
- 2: Fahrzeuginnenraum
- 3: Umrichter
- 4: Wärmeabfuhr-Schnittstelle
- 5: Wärmeträgerkanal
- 6: Klima-/Heizanlage
- 7: Wärmetauscher
- 8: Wärmepumpe
- 9: Heizkreis
- 10: Heizkörper
- 11: erste Klappe
- 12: zweite Klappe
- 13: erste Auslassöffnung
- 14: zweite Auslassöffnung
- 15: Lüfter
- 16: Pumpe
- 17: Wärmetauscher
- 18: Öffnung
- E: Expansionsventil
- K: Kondensator
- K_{P}: Kreisprozess
- P₁: vom Umrichter aufgenommene elektrische Leistung
- P₂: vom Umrichter abgegebene elektrische Leistung
- P_{K}: Elektrische Antriebsleistung der Pumpe 16
- P_{V}: Elektrische Antriebsleistung des Lüfters 15 im Umrichter
- P_{W}: Thermische Leistung des Umrichters
- P_{VD}: Elektrische Antriebsleistung des Verdichters
- Q_{V}: im Verdampfer aufgenommene Wärmeleistung
- Q_{W}: an den Heizkreis abgegebene Wärmeleistung
- V: Verdampfer
- VD: Verdichter

## Patentansprüche

1. Elektrisch betriebenes Schienenfahrzeug (1), umfassend:
- eine Klima- und/oder Heizanlage (6) zum Klimatisieren bzw. Heizen eines Fahrzeuginnenraumes (2), insbesondere Fahrgast- und/oder Personalraumes, wobei die Klima- und/oder Heizanlage (6) eine Wärmepumpe (8) und einen an die Wärmepumpe (8) angeschlossenen Heizkreis (9) umfasst, sowie einen Wärmetauscher (7) zur Aufnahme von Wärmeenergie aufweist, welcher ein Wärmetauscher der Wärmepumpe (8) ist und
- zumindest einen elektrischen Umrichter (3), insbesondere Traktionsumrichter und/oder Hilfsbetriebeumrichter, der eine Wärmeabfuhr-Schnittstelle (4) zum Abführen von Abwärme mittels eines Wärmeträgers aufweist, und wobei
- die Wärmeabfuhr-Schnittstelle (4) des Umrichters (3) über einen Wärmeträgerkanal (5) mit dem Wärmetauscher (7) der Klima- und/oder Heizanlage (6) verbunden ist
**dadurch gekennzeichnet, dass**
das Schienenfahrzeug (1) eine erste Klappe (11) aufweist, welche die Verbindung zwischen der Wärmeabfuhr-Schnittstelle (4) und dem Wärmetauscher (7) in einer ersten Stellung freigibt und in einer zweiten Stellung trennt und wobei die erste Klappe (11) in der zweiten Stellung eine in dem Wärmeträgerkanal (5) zwischen der Wärmeabfuhr-Schnittstelle (4) und dem Wärmetauscher (7) ausgebildete erste Auslassöffnung (13) zur Umgebung hin freigibt, wodurch die Wärmeabfuhr-Schnittstelle (4) mit der Umgebung verbunden ist und wobei das Schienenfahrzeug (1) eine zweite Klappe (12) aufweist, die eine zweite Auslassöffnung (14), über die der Wärmetauscher (7) mit der Umgebung verbindbar ist, in einer ersten Stellung schließt und in einer zweiten Stellung freigibt.

2. Schienenfahrzeug nach Anspruch 1, **dadurch**
**gekennzeichnet, dass** die erste Klappe (11) in der ersten Stellung die erste Auslassöffnung (13) schließt.

3. Schienenfahrzeug nach einem der Ansprüche 1 oder 2,
**dadurch gekennzeichnet, dass** die erste Klappe (11) und/oder die zweite Klappe (12) zwischen der ersten Stellung und der zweiten Stellung durch einen Antrieb betätigbar sind und/oder dass die erste Klappe (11) und die zweite Klappe (12) miteinander synchronisiert sind.

4. Schienenfahrzeug nach einem der Ansprüche 1 bis 3,
**dadurch gekennzeichnet, dass** der Wärmetauscher (7) in einem kastenförmigen Gehäuse untergebracht ist, wobei die zweite Klappe (12) in oder an dem kastenförmigen Gehäuse ausgebildet ist, und/oder dass der Wärmeträgerkanal (5) zumindest abschnittsweise durch ein kastenförmiges Gehäuse gebildet wird und die erste Auslassöffnung (13) in dem Gehäuse, vorzugsweise in unmittelbarer Nähe zum Wärmetauscher (7), ausgebildet ist.

## Claims

1. Electrically operated rail vehicle (1) comprising:
- an air-conditioning and/or heating device (6) for climatising and/or heating a vehicle interior (2), in particular passenger compartment and/or personnel compartment, wherein the air-conditioning and/or heating device (6) comprises a heat pump (8) and a heating circuit (9) connected to the heat pump (8), and has a heat exchanger (7) for absorbing heat energy, which is a heat exchanger of the heat pump (8), and
- at least one electric converter (3), in particular traction converter and/or auxiliary converter, which has a heat dissipation interface (4) for dissipating waste heat by means of a heat carrier, and wherein
- the heat dissipation interface (4) of the converter (3) is connected to the heat exchanger (7) of the air-conditioning and/or heating device (6) by way of a heat carrier channel (5),
**characterised in that**
the rail vehicle (1) has a first flap (11) which, in a first position, releases the connection between the heat dissipation interface (4) and the heat exchanger (7) and, in a second position, separates the same and wherein in the second position the first flap (11) releases a first outlet opening (13), embodied in the heat carrier channel (5) between the heat dissipation interface (4) and the heat exchanger (7), into the environment, as a result of which the heat dissipation interface (4) is connected to the environment and wherein the rail vehicle (1) has a second flap (12) which, in a first position, closes a second outlet opening (14), by way of which the heat exchanger (7) can be connected to the environment, and in a second position releases the same.

2. Rail vehicle according to claim 1, **characterised in that** in the first position the first flap (11) closes the first outlet opening (13).

3. Rail vehicle according to one of claims 1 or 2,
**characterised in that** the first flap (11) and/or the second flap (12) can be actuated between the first position and the second position by a drive and/or that the first flap (11) and the second flap (12) are synchronised with one another.

4. Rail vehicle according to one of claims 1 to 3,
**characterised in that** the heat exchanger (7) is accommodated in a box-shaped housing, wherein the second flap (12) is embodied in or on the box-shaped housing and/or that the heat carrier channel (5) is formed at least in sections by a box-shaped housing and the first outlet opening (13) is embodied in the housing, preferably in the immediate vicinity of the heat exchanger (7).

## Revendications

1. Véhicule ferroviaire à traction électrique (1), comportant :
- une installation de climatisation et/ou de chauffage (6) pour climatiser respectivement chauffer un habitacle (2), notamment un compartiment passagers et/ou personnel, l'installation de climatisation et/ou de chauffage (6) comportant une pompe thermique (8) et un circuit de chauffage (9) relié à la pompe thermique (8), ainsi qu'un échangeur de chaleur (7) pour reprendre de l'énergie thermique qui est un échangeur de chaleur de la pompe thermique (8) et
- au moins un convertisseur électrique (3), notamment un convertisseur de traction et/ou un convertisseur auxiliaire comportant une interface d'évacuation de chaleur (4) pour évacuer la chaleur perdue moyennant un caloporteur,
- l'interface d'évacuation de chaleur (4) du convertisseur (3) étant reliée à l'échangeur de chaleur (7) de l'installation de climatisation et/ou de chauffage (6) via un canal caloporteur (5),
**caractérisé en ce que**
le véhicule ferroviaire (1) comporte un premier clapet (11) libérant la liaison entre l'interface d'évacuation de chaleur (4) et l'échangeur de chaleur (7) dans une première position et la séparant dans une deuxième position, et, dans la deuxième position, le premier clapet (11) libérant un premier orifice de sortie (13) ménagé dans le canal caloporteur (5) entre l'interface d'évacuation de chaleur (4) et l'échangeur de chaleur (7) vers l'ambiance, faisant ainsi communiquer l'interface d'évacuation d'air (4) avec l'ambiance, le véhicule ferroviaire (1) comportant un deuxième clapet (12) qui, dans une première position, obture un deuxième orifice de sortie (14) permettant la communication de l'échangeur de chaleur (7) avec l'ambiance, et la dégage en une deuxième position.

2. Véhicule ferroviaire selon la revendication 1, **caractérisé en ce que,** dans la première position, le premier clapet (11) obture le premier orifice de sortie (13).

3. Véhicule ferroviaire selon l'une des revendications 1 ou 2, **caractérisé en ce que,** entre les première et deuxième positions, le premier clapet (11) et/ou le deuxième clapet (12) est actionnable grâce à un mécanisme d'entraînement et/ou le premier clapet (11) et le deuxième clapet (12) sont synchronisés entre eux.

4. Véhicule ferroviaire selon l'une des revendications 1 à 3, **caractérisé en ce que** l'échangeur de chaleur (7) est logé dans un boîtier en forme de caisson, le deuxième clapet (12) étant conformé dans ou sur le boîtier en forme de caisson, et/ou que le canal caloporteur (5) est prévu au moins par sections sous forme d'un boîtier en forme de caisson et le premier orifice de sortie (13) est ménagé dans le boîtier, de préférence à proximité immédiate de l'échangeur de chaleur (7).
